# EUROPÄISCHE PATENTSCHRIFT

(11) **EP 3 244 369 B1**
(45) Veröffentlichungstag und Bekanntmachung des Hinweises auf die Patenterteilung: **06.04.2022**
(21) Anmeldenummer: 17170694.8
(22) Anmeldetag: 11.05.2017
(51) Int. Cl.: G06T 5/50

(54) **VERFAHREN ZUR WIEDERGABE VON BILDSEQUENZEN UND BILDVERARBEITUNGSEINHEIT SOWIE COMPUTERPROGRAMM HIERZU**
METHOD FOR REPRODUCING SEQUENCES OF IMAGES AND IMAGE PROCESSING UNIT AND COMPUTER PROGRAMME FOR THE SAME
PROCÉDÉ DE REPRÉSENTATION DE SÉQUENCES D'IMAGES ET UNITÉ DE TRAITEMENT D'IMAGES ET PROGRAMME INFORMATIQUE ASSOCIÉ

(30) Priorität: 11.05.2016 DE 102016108693
(43) Veröffentlichungstag der Anmeldung: 15.11.2017
(73) Patentinhaber: Dream CHIP Technologies GmbH, 30827 Garbsen (DE)
(72) Erfinder: Fiedler, Martin, 30655 Hannover (DE); Hesselbarth, Dr. Sebastian, 22769 Hamburg (DE); Schewior, Dr. Gregor, 30171 Hannover (DE); Volkers, Dr. Hans, verstorben (DE)
(74) Vertreter: Gramm, Lins & Partner Patent- und Rechtsanwälte PartGmbB

(56) Entgegenhaltungen:
- US-A1- 2008 068 359
- US-A1- 2010 103 089
- GUILLAUME FORBIN ET AL: "Nonlinear Flicker Compensation for Archived Film Sequences Using Motion-Compensated Graylevel Tracing", IEEE TRANSACTIONS ON CIRCUITS AND SYSTEMS FOR VIDEO TECHNOLOGY, INSTITUTE OF ELECTRICAL AND ELECTRONICS ENGINEERS, Bd. 18, Nr. 6, 1. Juni 2008 (2008-06-01), Seiten 803-816, XP011204596, ISSN: 1051-8215

## Beschreibung

Die Erfindung betrifft ein Verfahren zur Wiedergabe von Bildsequenzen mit flackernden Lichtinformationen, wobei eine Bildsequenz eine Folge von Bildern einer zeitlich hintereinander erfassten Bildszene umfasst.

Die Erfindung betrifft weiterhin eine Bildbearbeitungseinheit und ein Computerprogramm zur Durchführung des Verfahrens.

Zur Kodierung von Bilddaten ist es aus dem ISO/IEC-Standard 11172-2: "Information technology - Coding of moving pictures and associated audio for digital storage media at up to about 1,5 Mbit/s - Part 2: Video" bekannt, eine Bewegungsschätzung mit der Berechnung von Bewegungsvektoren durchzuführen. Damit wird die Effizienz der Vorhersage von Pel-Werten verbessert. Hierzu ist im Encoder nach der Bildumgruppierung ein Bewegungsschätzer nachgeschaltet. Prinzipiell wird für die Schätzung von Bewegungsvektoren geprüft, welche Bildblöcke in aufeinander folgenden Bildern einer Bildsequenz am besten aufeinander passen. Hierzu wird der kleinste Fehler beim Vergleich von zwei Bildblöcken aufeinander folgender Bilder gesucht und der räumliche Versatz zwischen den am besten passenden Bildblöcken als Bewegungsvektor angenommen. Zur Reduzierung des Rechenaufwandes wird ein Suchraum festgelegt. Diese Verfahren zur Bewegungsschätzung sind im Detail im Kapitel D.6.2 des ISO/IEC-Standards 11172-2 beschrieben.

Der MPEG-4 Standard ISO/IEC 14496-10: "Coding of audiovisual objects - Part 10: Advanced Video Coding" beschreibt die Kodierung von Objekten, wobei auch hier eine Bewegungsschätzung der Luminanz-Information vorgenommen wird. Weitere Verfahren zur Bewegungsschätzung sind aus dem Bereich der Phasenkorrelation, des optischen Flusses (z. B. Lucas-Kanade-Verfahren) und dem Bereich der zeitlich-örtlichen rekursiven Suche (3DRS) bekannt. Ziel solcher Verfahren zur Bewegungsschätzung ist es, so genau wie möglich die Bewegungen aller Bildinhalte bis hin zu einzelnen Bildpunkten von einem zum anderen Bild in Vorwärts- und/oder Rückwärtsrichtung zu schätzen.

US 8,922,706 B2 beschreibt ein Bildaufzeichnungssystem mit einem Bildsensor, einer Lichtquelle und einer Datenverarbeitungseinheit. Zur Beseitigung von Lichtflackern, das durch Helligkeitsveränderungen im Umgebungslicht verursacht wird, ist eine Synchronisation der Beleuchtung durch die Lichtquelle mit der Bildaufzeichnung vorgesehen. Die Aufzeichnung aufeinander folgender Bilder erfolgt in Intervallen der Helligkeitsvariation des Umgebungslichtes. Es ist damit eine aktive Ausleuchtung der aufzunehmenden Umgebung erforderlich.

Aus FORBIN, G. and VLACHOS, T.: "Nonlinear Flicker Compensation for Archived Film Sequences Using Motion-Compensated Graylevel Tracing", IEEE Transactions on Circuits and Systems for Video Technology, Institute of Electrical and Electronics Engineers, Bd. 18, Nr. 6, Juni 2008, Seiten 803-816, ist ein Verfahren zur Restaurierung von in Filmarchiven archivierten Filmsequenzen bekannt, das eine Bewegungskompensation nutzt. Das Verfahren dient zur Beseitigung bzw. Abschwächung von Bildfehlern, welche durch eine ungleichmäßige Belichtung des Filmmaterials, durch mehrfaches Kopieren des Filmmaterials, durch Staub oder durch Alterungsprozesse des Filmmaterials verursacht sein können.

Aus US 2010/103089 A1 ist ein Verfahren bekannt, mit dem Helligkeitsschwankungen in der Hintergrundbeleuchtung eines LCD-Displays kompensiert werden können.

Aus US 2008/068359 A1 ist ein Verfahren bekannt, mit dem eine Bewegungsunschärfe kompensiert werden kann, die prinzipbedingt bei der Anzeige auf LCD-Displays, Plasma-Displays und ähnlichen Displays entsteht.

Bei der Bildaufzeichnung von Bildsequenzen, die von Leuchtdioden emittiertes Licht beinhalten, kommt es zu Bildern abwechselnd mit Lichtinformationen der LED-Lichtquelle und ohne Lichtinformationen. Dies liegt darin begründet, dass LED-Lichtquellen mit hoher Frequenz ein- und ausgeschaltet werden. Wenn die Bildaufzeichnungseinheit nicht mit der Lichtquelle synchronisiert ist, dann ist die aufgenommene und dargestellte Bildinformation unter Umständen unvollständig.

Dies ist insbesondere kritisch, wenn eine elektronische Kamera die Funktion des Rückfahrspiegels in einem Kraftfahrzeug übernimmt und das aufgezeichnete Bild nach der Bildverarbeitung auf einem Display angezeigt wird. Dann kann es durch die fehlende Synchronisation der Bildsequenzaufzeichnung mit der Kamera mit den Lichtquellen der Umgebung dazu kommen, dass z. B. ein Blinker eines Fahrzeuges in der Umgebung nicht wiedergegeben wird. Dies liegt dann darin begründet, dass Bilder während der Leuchtphase des Blinkers in den für das menschliche Auge nicht sichtbaren aber vorhandenen Austastintervallen des Blinkers aufgenommen werden.

Dies ist allerdings nur ein Beispiel für die Probleme, die durch flackernde Lichtinformationen im Zusammenhang mit dem Einsatz von Kameras in Kraftfahrzeugen hervorgerufen werden. Kameras, die in Kraftfahrzeuge integriert sind, d. h. Fahrzeugkameras, werden in Kraftfahrzeugen für eine Vielzahl von Aufgaben eingesetzt. Sie dienen z. B. als Frontkameras, als Rückkameras bzw. Rückfahrkameras oder als Seitenkameras zur Beobachtung des Fahrzeugumfelds durch den Fahrer. Sie fungieren aber in der Form von Monokameras oder Stereokameras als optische Sensoren, die zur Ermittlung von Sensordaten für Fahrerassistenzsysteme wie Notbremsassistenzsysteme, Abstands- und Spurhalteassistenzsysteme und andere Assistenzsysteme genutzt werden. Im Zusammenhang mit solchen in Kraftfahrzeuge integrierten Kameras kann die unvollständige und/oder fehlerhafte Wiedergabe von Bildsequenzen, die flackernde Lichtinformationen aufweisen, zu einem erhöhten Unfallrisiko führen.

Aufgabe der vorliegenden Erfindung ist es daher, ein verbessertes Verfahren zur Wiedergabe von Bildsequenzen mit flackernden Lichtinformationen zu schaffen, bei dem die Lichtinformationen ohne Synchronisation der Bildaufzeichnung mit einer Leuchtquelle zuverlässig in der wiederzugebenden Bildsequenz enthalten ist.

Die Aufgabe wird durch das Verfahren mit den Merkmalen des Anspruchs 1 sowie durch die zur Durchführung des Verfahrens ausgebildete Bildverarbeitungseinheit mit den Merkmalen des Anspruchs 12 und das Computerprogramm mit den Merkmalen des Anspruchs 15 gelöst. Vorteilhafte Ausführungsformen sind in den Unteransprüchen beschrieben.

Zur Wiedergabe von Bildsequenzen mit flackernden Lichtinformationen wird vorgeschlagen, dass das Verfahren durch eine Bildverarbeitungseinheit ausgeführt wird, die in ein Kraftfahrzeug integriert ist. Vorgesehen ist dabei, dass mittels einer in das Kraftfahrzeug integrierten Kamera, die Bestandteil der Bildverarbeitungseinheit ist oder an die Bildverarbeitungseinheit angeschlossen ist, eine Bildsequenz erzeugt wird, die eine Folge von Bildern einer zeitlich hintereinander erfassten Bildszene umfasst.

Des Weiteren wird vorgeschlagen, Bewegungsvektoren für Bilddaten eines Bildes zur Beschreibung der räumlichen Verschiebung eines Bilddatums in einem ersten Bild zu demselben Bilddatum in einem zeitlich versetzten zweiten Bild zu schätzen. Es wird dann ein zeitlich versetztes drittes Bild durch Mischen der Bilddaten des ersten Bildes, für die Bewegungsvektoren geschätzt wurden, mit den Bilddaten des zweiten Bildes durchgeführt, wobei die Bilddaten des ersten Bildes relativ zu den Bilddaten des zweiten Bildes durch einen durch jeweils einen Bewegungsvektor definierten räumlichen Versatz verschoben werden. Die Bewegungsschätzung kann dabei in Vorwärts- und/oder Rückwärtsrichtung erfolgen.

Durch das Mischen von zwei zeitlich versetzten Bildern der aufgezeichneten Bildsequenz werden die beiden Bilder der aufgezeichneten Bildsequenz quasi interpoliert. Für den Fall, dass bei flackernden Lichtinformationen ein Bild in einer Austastlücke aufgenommen wurde, bleibt diese Lichtinformation aus dem anderen Bild enthalten. Diese Lichtinformation wird durch das Mischen zwar abgeschwächt, ist aber trotzdem vorhanden. Die aufgezeichneten zeitlich versetzten Bilder werden für das Mischen nach einer Bewegungsschätzung bewegungskompensiert, sodass die durch die zwischenzeitliche Bewegung verschobenen Bildinhalte für die Quasi-Interpolation wieder zusammengeführt werden. Für das Verfahren werden damit die hinreichend bekannten Methoden zur Bewegungsschätzung und Bewegungskompensation genutzt.

Das generierte, zeitlich versetzte dritte Bild kann dann direkt wiedergegeben oder nach einer weiteren Bearbeitung in ein wiederzugebendes Bild einer Bildsequenz einfließen.

Unter einer flackernden Lichtinformation wird verstanden, dass die Lichtquelle periodisch ihre Helligkeit verändert, wie dies bei der Ansteuerung von gepulsten LED-Lichtquellen der Fall ist.

Das Schätzen der Bewegungsvektoren kann für Bilddaten eines aus einem aufgenommenen Eingangsbild generierten ersten Ausgangsbildes in Bezug auf ein hierzu zeitlich versetztes Eingangsbild erfolgen. So ist bspw. denkbar, dass ein durch Mischen generiertes Ausgangsbild die Basis für die Bewegungsschätzung in Bezug auf ein aufgenommenes Eingangsbild der Bildszene genutzt wird. Ein solches zeitlich versetztes Eingangsbild der Bildszene wird dann mit den mittels der geschätzten Bewegungsvektoren bewegungskompensierten Bilddaten des ersten Ausgangsbildes gemischt, um ein zum ersten Ausgangsbild zeitlich versetztes zweites Ausgangsbild zu generieren.

Diese Ausgangsbilder können dann unmittelbar wieder als Ausgabe-Bildsequenz wiedergegeben werden. Das zweite Ausgangsbild kann dann wiederum als Basis für die Schätzung von Bewegungsvektoren in Bezug auf ein nachfolgendes aufgenommenes Eingangsbild der Bildsequenz genutzt werden.

Insofern können die Schritte des Schätzens von Bewegungsvektoren und Mischens zur Generierung eines Ausgangsbildes mit einem im vorhergehenden Schritt generierten Ausgangsbild ständig wiederholt werden.

Dieses Verfahren ist mit einer relativ geringen Komplexität und Bandbreite realisierbar und führt zu einem guten Ausgleich von Helligkeitsschwankungen zwischen Bildern (Deflickern).

Es kann aber auch ein Schätzen der Bewegungsvektoren für Bilddaten für ein aufgenommenes erstes Eingangsbild in Bezug auf diese Bilddaten in einem zeitlich vorhergehenden und/oder zeitlich nachfolgenden Eingangsbild erfolgen. Dieses erste Eingangsbild wird dann mit den mittels der geschätzten Bewegungsvektoren bewegungskompensierten Bilddaten des zeitlich vorhergehenden und/oder zeitlich nachfolgenden Eingangsbildes zur Erzeugung eines zum ersten Eingangsbild zeitlich passenden Ausgangsbildes gemischt.

Es werden somit die aufgenommenen Eingangsbilder einer Bildsequenz mit einer Bewegungskompensation miteinander kombiniert, um aus mehreren Eingangsbildern ein Ausgangsbild zu mischen. Hierbei kann eine Vorwärts-Bewegungsschätzung, eine Rückwärts-Bewegungsschätzung oder eine kombinierte Vorwärts- und Rückwärts-Bewegungsschätzung zu zeitlich vorhergehenden und/oder zeitlich nachfolgenden Eingangsbildern vorgenommen werden.

Auch dabei wird ein guter Ausgleich von Helligkeitsschwankungen zwischen Bildern erreicht (Deflicker-Performance). Artefakte können weiter verringert werden. Die Komplexität des Algorithmus und die Bandbreite sind allerdings etwas höher als bei der vorher genannten Ausführungsform.

Es kann auch ein Schätzen der Bewegungsvektoren von Bilddaten für ein Paar zeitlich aufeinanderfolgender, aufgenommener Eingangsbilder zur Ermittlung der räumlichen Verschiebung der Bilddaten zwischen diesen Eingangsbildern und ein Generieren eines Ausgangsbildes durch Mischen von mittels der geschätzten Bewegungsvektoren bewegungskompensierten Bilddaten dieses Paares von Eingangsbildern erfolgen. Auch hier werden zeitlich aufeinander folgende Eingangsbilder nach einer Bewegungskompensation miteinander zur Generierung eines Ausgangsbildes gemischt. Dabei kann z. B. eine Vorwärts-Bewegungsschätzung von einem Eingangsbild zum zeitlich nachfolgenden Eingangsbild und eine Rückwärts-Bewegungsschätzung von dem zeitlich nachfolgenden Bild zu dem zeitlich vorhergehenden Bild durchgeführt werden. Die beiden zeitlich aufeinander folgenden Eingangsbilder werden dann mit den so ermittelten Bewegungsvektoren bewegungskompensiert und miteinander vermischt.

Dabei kann ein Generieren eines interpolierten Ausgangsbildes durch Mischen von einem Paar zeitlich aufeinander folgender, mittels der geschätzten Bewegungsvektoren bewegungskompensierter Ausgangsbilder erfolgen.

Die im vorhergehenden Schritt generierten Ausgangsbilder werden somit nicht unmittelbar zur Wiedergabe genutzt, sondern wiederum mittels der im ersten Schritt geschätzten Bewegungsvektoren nochmals nach einer Bewegungskompensation miteinander vermischt.

Der Schritt der Generierung von interpolierten Ausgangsbildern mit Paaren von im vorhergehenden Schritt generierten interpolierten Ausgangsbildern kann dann durch Mischen jeweils eines Paares zeitlich aufeinander folgender, mittels der geschätzten Bewegungsvektoren bewegungskompensierter interpolierter Ausgangsbilder wiederholt werden. So kann diese Generierung von interpolierten Ausgangsbildern aus im vorhergehenden Schritt generierten, interpolierten Ausgangsbildern mehrfach in mehreren Stufen z. B. drei- bis viermal wiederholt werden.

Dies führt zu einer erheblichen Verbesserung des Ausgleichs von Helligkeitsschwankungen bei sehr geringen Artefakten. Die Komplexität des Algorithmus ist ebenso wie der Bandbreitenbedarf sehr hoch.

Die Bilddaten, für die Bewegungsvektoren geschätzt werden, können bspw. Bildblöcke in einem Bild sein. Ein Bewegungsvektor beschreibt dann den räumlichen Versatz eines Ankerpunktes für einen Bildblock in einem zeitlich vorhergehenden oder zeitlich nachfolgenden Bildrahmen der Bildsequenz.

Wie eingangs bereits erläutert wurde, können durch flackernde Lichtinformationen in Bildsequenzen, die von Fahrzeugkameras erzeugt worden sind, Sicherheitsrisiken, z. B. durch eine erhöhte Unfallgefahr, ausgehen, wenn die Bildsequenzen wegen der flackernden Lichtinformationen fehlerhaft oder unvollständig im Fahrzeug wiedergegeben werden.

Das erfindungsgemäße Verfahren wird daher in einem Kraftfahrzeug ausgeführt.

Das erfindungsgemäße Verfahren wird durch eine Bildverarbeitungseinheit ausgeführt, die in ein Kraftfahrzeug integriert ist. Das erfindungsgemäße Verfahren kann dabei insbesondere von einer Datenverarbeitungseinheit ausgeführt werden, die Bestandteil der Bildverarbeitungseinheit ist oder mit dieser verbunden ist. Die Bildsequenz ist eine von einer in das Kraftfahrzeugzeug integrierten Kamera erzeugte Bildsequenz. Die in das Kraftfahrzeugzeug integrierte Kamera ist dabei Bestandteil der Bildverarbeitungseinheit oder ist an die Bildverarbeitungseinheit angeschlossen.

Eine solche in das Kraftfahrzeug integrierte Kamera wird auch als Fahrzeugkamera bezeichnet. Eine solche in das Fahrzeug integrierte Kamera kann insbesondere eine Frontkamera, eine Rückkamera, eine Rückfahrkamera, eine Seitenkamera oder eine andere in das Fahrzeug integrierte Kamera sein. Eine solche in das Fahrzeug integrierte Kamera kann insbesondere eine Kamera sein, welche dem Fahrer zur Beobachtung des Fahrzeugumfelds dient. Eine solche in das Fahrzeug integrierte Kamera kann insbesondere auch eine Monokamera oder eine Stereokamera sein, welche als optischer Sensor zur Ermittlung von Sensordaten für ein oder mehrere Fahrerassistenzsysteme des Kraftfahrzeugs dient.

Eine derartige Ausführungsform des erfindungsgemäßen Verfahrens ist besonders vorteilhaft, weil dadurch die oben genannten Sicherheitsrisiken im Umfeld des Einsatzes von Kameras in Kraftfahrzeugen verringert oder sogar vollständig beseitigt werden können. Dies ist von besonderer Bedeutung, da LEDs, die flackernde Lichtinformationen verursachen, eine immer größere Verbreitung im Fahrzeugumfeld finden.

Die flackernden Lichtinformationen können daher insbesondere flackernde Lichtinformationen sein, die durch von Leuchtdioden emittiertes Licht hervorgerufen werden.

Die Bildverarbeitungseinheit hat Datenspeicher zum Abspeichern von Bilddaten und eine Datenverarbeitungseinheit. Die Datenverarbeitungseinheit ist dann bspw. mittels geeigneter Programmierung oder in Hardware als ASIC, FPGA oder ähnliches zur Durchführung des Verfahrens ausgebildet. Hierzu erfolgt ein Zugriff auf die in dem Datenspeicher abgespeicherten Bilddaten.

Die Bildverarbeitungseinheit umfasst eine Kamera oder ist an eine Kamera angeschlossen, welche die digitalen Bilddaten einer Bildsequenz zur weiteren Verarbeitung liefert. Die Bildverarbeitungseinheit kann weiterhin an einen Bildschirm angeschlossen werden, um die generierten Ausgangsbilder einer Bildsequenz anzuzeigen.

Erfindungsgemäß sind die Bildverarbeitungseinheit und die Kamera, die Bestandteil der Bildverarbeitungseinheit ist oder an die Bildverarbeitungseinheit angeschlossen ist, in einem Kraftfahrzeug integriert.

Auf diese Weise ist es vorteilhaft möglich, das erfindungsgemäße Verfahren im Kraftfahrzeug zu nutzen und die oben genannten Sicherheitsrisiken im Umfeld des Einsatzes von Kameras in Kraftfahrzeugen zu verringern oder sogar vollständig zu beseitigen.

Die Erfindung wird nachfolgend anhand von Ausführungsbeispielen mit den beigefügten Zeichnungen beispielhaft näher erläutert. Es zeigen:
- Figur 1 -: Skizze einer ersten Ausführungsform des Verfahrens;
- Figur 2 -: Skizze einer zweiten Ausführungsform des Verfahrens;
- Figur 3 -: Skizze einer drittenAusführungsform des Verfahrens;
- Figur 4 -: Blockdiagramm einer Bildverarbeitungseinheit zur Durchführung des Verfahrens.

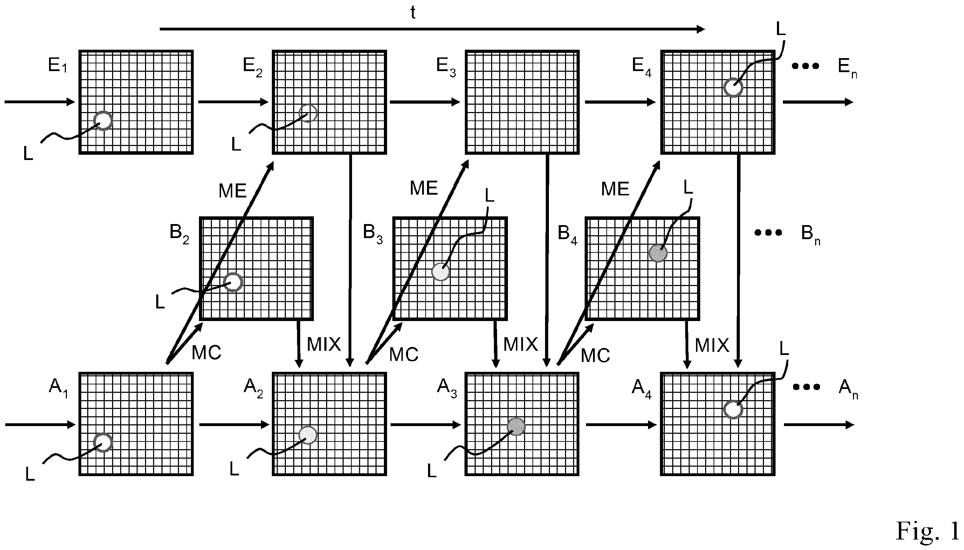

Figur 1 zeigt eine Skizze einer ersten Ausführungsform des Verfahrens zur Wiedergabe von Bildsequenzen mit flackernden Lichtinformationen. Erkennbar ist, dass eine Bildsequenz mit in der Zeit t zeitlich hintereinander erfassten Eingangsbildern E₁, E₂, E₃, E₄, ..., Eₙ vorhanden ist. Diese Eingangsbilder können bspw. von einer digitalen Bildkamera aufgenommen worden sein und in einem Datenspeicher zwischengespeichert werden.

Unter "zeitlich aufeinander folgend" wird im Sinne der vorliegenden Erfindung nicht notwendigerweise verstanden, dass zwei Bilder einer Bildsequenz unmittelbar hintereinander aufgenommen sein müssen. Denkbar ist, dass auch Zwischenbilder, die nicht weiter verarbeitet werden, vorhanden sind. Es muss nur ein verhältnismäßig kurzer Zeitraum hinter den Bildern einer Bildsequenz vorhanden sein, damit die Bildsequenz mit den tatsächlichen Bildbewegungen und Bildinformationen noch gut wahrnehmbar wiedergegeben werden kann.

Aus diesen Eingangsbildern E₁, ..., Eₙ der Bildsequenz werden Ausgangsbilder A₁, A₂, A₃, A₄, ..., Aₙ generiert, die direkt oder nach einer Weiterverarbeitung auf einem Bildschirm wiedergegeben werden.

Es ist nun in der ersten Ausführungsform des Verfahrens vorgesehen, dass eine Bewegungsschätzung ME von Bildinformationen eines Ausgangsbildes Aᵢ mit i = 1, 2, 3, 4, n zu einem zeitlich versetzten Eingangsbild Eᵢ₊₁ (oder gegebenenfalls auch Eᵢ₋₁) der Eingangs-Bildsequenz vorgenommen wird. Hier wird mit den an sich bekannten Verfahren der Bewegungsschätzung für Bildinformationen festgestellt, inwieweit diese von dem Ausgangsbild Aᵢ zum Vergleichsbild Eᵢ₊₁ räumlich versetzt sind. Hierzu kann bspw. anhand der Luminanz-Informationen die räumliche Verschiebung von als Lichtinformationen detektierten Objekten überprüft werden, um für diese Lichtpunkte L Bewegungsvektoren zu ermitteln. Denkbar ist aber auch, dass Bewegungsvektoren für Bildblöcke der Bilder ermittelt werden.

Für die Bewegungsschätzung wird geprüft, welche Bildinformationen im Vergleichsbild am besten mit den Bildinformationen des Ausgangsbildes übereinstimmen.

Mit dem mindestens einen ermittelten Bewegungsvektor erfolgt dann eine Bewegungskompensation des Ausgangsbildes Aᵢ, um tatsächlich ein reales Zwischenbild Bᵢ₊₁ zu berechnen oder dieses als virtuelles Zwischenbild direkt mit dem nachfolgenden Schritt des Mischens dieses Zwischenbildes Bᵢ₊₁ mit dem zugehörigen Eingangsbild Eᵢ₊₁ zu mischen.

Erkennbar ist, dass so ein zeitlich versetztes Ausgangsbild Aᵢ₊₁ durch Mischen des bewegungskompensierten vorhergehenden Ausgangsbildes Aᵢ mit dem zeitlich nachfolgenden Eingangsbild Eᵢ₊₁ erzeugt wird.

Eine solche generierte Abfolge von Ausgangsbildern Aᵢ mit i = 1 ..., n kann dann unmittelbar auf einem Bildschirm ausgegeben werden.

Deutlich wird, dass durch das Mischen die zunächst noch vollständig erhaltene Lichtinformation L aus dem Ausgangsbild nach Bewegungsschätzung mit der im nachfolgenden Eingangsbild Eᵢ₊₁ vorhandenen Lichtinformation L vermischt (interpoliert) wird. Die Lichtinformation im zeitlich nachfolgenden Ausgangsbild Aᵢ₊₁ ist dann zwar etwas abgeschwächt, aber immer noch vorhanden. Dies wird insbesondere anhand des dritten Ausgangsbildes A₃ deutlich, wo die abgeschwächte Lichtinformation L grau schattiert dargestellt ist. Die bereits etwas abgeschwächte Lichtinformation L aus dem vorhergehenden Ausgangsbild A₂ wird dabei mit dem dritten Eingangsbild E₃ gemischt, in der die Lichtinformation aufgrund des Flackerns nicht sichtbar ist. Dennoch ist die Lichtinformation in der Bildsequenz immer zumindest teilweise erkennbar und optisch aufgrund der Abfolge der Bilder in der Bildsequenz mit ihrer tatsächlichen Bewegung in dem Bild sichtbar.

Damit wird auf einfache Weise ein Deflickern der auf den Eingangsbildern der Bildsequenz teilweise nicht sichtbaren flackernden Lichtinformation L erreicht.

Das Verfahren basiert prinzipiell auf dem Prinzip der Bewegungsschätzung zwischen dem letzten Ausgangsbild und dem nachfolgenden neuen Eingangsbild. Die Bewegungskompensation überführt dann das letzte Ausgangsbild in den Zeitrahmen des nachfolgenden Eingangsbildes. Diese Bewegungskompensation kann direkt in die Bewegungsschätzung mit integriert werden oder bei dem Schritt des Mischens gleichzeitig mit erfolgen. Sie kann aber auch als separater Schritt ausgeführt werden.

Die Bewegungsschätzung und Bewegungskompensation kann für ganze Pel bzw. Pixel oder mit einer Genauigkeit von Teil-Pixeln (Halb-Pel oder Viertel-Pel) durchgeführt werden. Die Bildqualität durch Berücksichtigung von Teil-Pixeln bei der Bewegungsschätzung und Bewegungskompensation ist besser als bei Voll-Pel-Verfahren.

Das Mischen kann durch direkte Interpolation oder mit Wichtungsfaktoren gefiltert erfolgen. Dabei kann das Mischen für die Luminanz- und Chrominanz-Pixel gleich oder bevorzugt unterschiedlich erfolgen. Wenn die Luminanz-Pixel des Eingangsbildes einen größeren Helligkeitswert als die entsprechenden Luminanz-Pixel im bewegungskompensierten Zwischenbild Bᵢ sind, kann auch ein Ausgangsbild nur den Luminanzwert des Eingangsbildes enthalten, ohne dass die entsprechende Luminanz-Information aus dem bewegungskompensierten Zwischenbild Bᵢ hinzugemischt wird.

Andernfalls ist es vorteilhaft, wenn die Luminanz-Bildinformation des bewegungskompensierten Zwischenbildes Bᵢ mit einem höheren Wichtungsfaktor gewichtet zu dem mit geringerem Wichtungsfaktor gewichteten entsprechenden Bilddatum des zeitlich versetzten Eingangsbildes Eᵢ₊₁ z. B. durch Addition gemischt wird. Dies führt zu einem IIR-Tiefpassfilter erster Ordnung.

Für die Chrominanz-Pixel ist es vorteilhaft, wenn die zugehörigen Chrominanz-Pixel des bewegungsgeschätzten Zwischenbildes Bᵢ₊₁ mit dem zugehörigen Eingangsbild Eᵢ₊₁ gewichtet vermischt werden. Die Differenz der Wichtungsfaktoren sollte hier geringer als bei der Mischung der Luminanz-Pixel sein, um Artefakte zu verringern.

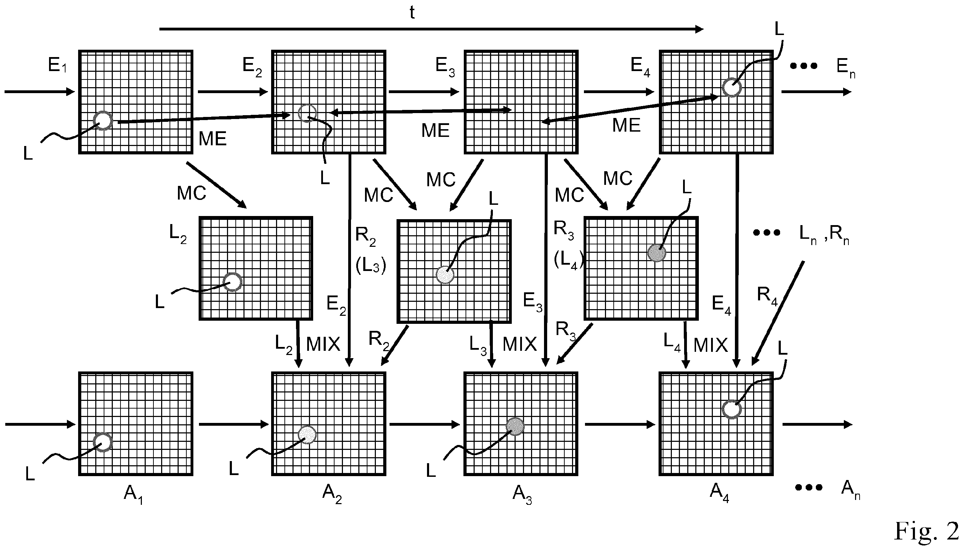

Figur 2 zeigt eine Skizze einer zweiten Ausführungsform des Verfahrens zur Wiedergabe von Bildsequenzen mit flackernden Lichtinformationen L. Dabei werden drei zeitlich aufeinanderfolgende Eingangsbilder Eᵢ₋₁; Eᵢ, Eᵢ₊₁ zur Generierung eines zugehörigen Ausgangsbildes Aᵢ genutzt. Es erfolgt eine Vorwärtsschätzung von dem zeitlich vorhergehenden Eingangsbild Eᵢ₋₁ zum zeitlich nachfolgenden Eingangsbild Eᵢ und eine Rückwärtsschätzung von dem zeitlich nachfolgenden Eingangsbild Eᵢ₊₁ zum zeitlich vorhergehenden Eingangsbild Eᵢ. Mit dieser bidirektionalen Bewegungsschätzung werden somit für jedes Bilddatum zwei Bewegungsvektoren einmal für die Vorwärtsschätzung FW und einmal für die Rückwärtsschätzung BW ermittelt. Damit erfolgt eine Bewegungskompensation des zeitlich vorhergehenden Bildes Eᵢ₋₁ mit dem Vorwärts-Bewegungsvektor FW und dem negativen Rückwärts-Bewegungsvektor BW in den Zeitrahmen des mittleren Eingangsbildes Eᵢ. Zudem erfolgt eine Bewegungskompensation des zeitlich nachfolgenden Bildes Eᵢ₊₁ mit dem Rückwärts-Bewegungsvektor BW und dem negativen Vorwärts-Bewegungsvektor FW in den Zeitrahmen des mittleren Eingangsbildes Eᵢ. Diese bewegungskompensierten Zwischenbilder Lᵢ, Rᵢ aus dem zeitlich vorhergehenden und zeitlich nachfolgenden Eingangsbild Eᵢ₋₁, Eᵢ₊₁ werden dann mit dem mittleren Eingangsbild Eᵢ gemischt, um aus diesen drei Bildern ein Ausgangsbild Aᵢ zu ermitteln.

Wiederum kann die Bewegungskompensation unmittelbar zusammen mit der Bewegungsschätzung oder unmittelbar im Schritt des Mischens erfolgen, sodass nicht zwingend ein vollständiges Zwischenbild Lᵢ, Rᵢ erzeugt und abgespeichert werden muss. Diese Zwischenbilder Lᵢ, Rᵢ können auch als eine Art virtuelle Bilder beim Schritt der Bewegungsschätzung oder des Mischens verwendet werden.

Auch hier können für die Bewegungsschätzung und Bewegungskompensation volle Pixel (Full-Pel) oder Teil-Pixel (z. B. Half-Pel, Quarter-Pel) benutzt werden.

Das Mischen kann für die Luminanz- und Chrominanz-Pixel gleichermaßen z. B. durch Addition erfolgen. Denkbar ist aber auch eine Filterung. Für die Luminanz-Pixel kann der entsprechende Ausgangs-Bildpixel bspw. als Mittelwert des Maximalwertes des linken und rechten Zwischenbildes Lᵢ, Rᵢ und des Eingangsbildes Eᵢ und des Medians der Pixel dieser Bilder genutzt werden. Denkbar ist dabei auch, dass der Median aus den Zwischenbildern für die Vorwärtskompensation und Rückwärtskompensation getrennt berechnet wird.

Für die Chrominanz-Pixel kann einfach nur der Mittelwert der entsprechenden Pixel aus den Zwischenbildern Lᵢ, Rᵢ und dem entsprechenden Eingangsbild Eᵢ berechnet werden.

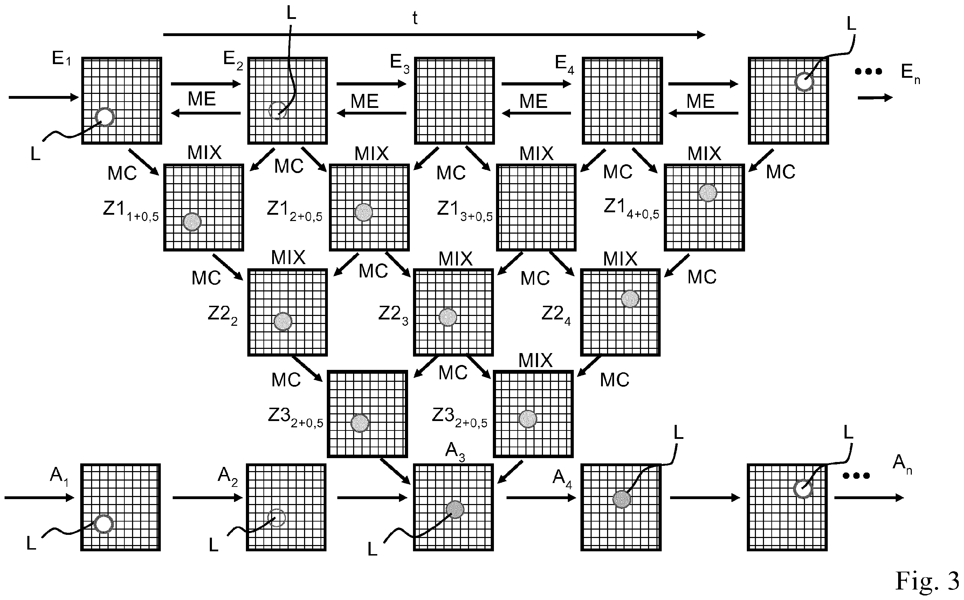

Figur 3 lässt eine Skizze einer dritten Ausführungsform des Verfahrens zur Wiedergabe von Bildsequenzen mit flackernden Lichtinformationen erkennen. Hierbei wird eine rekursive Anwendung einer bewegungskompensierten Interpolation in mehreren Stufen vorgeschlagen. Dargestellt sind drei Zwischenstufen, wobei auch eine andere Anzahl von zwei, vier, fünf oder mehr Zwischenstufen denkbar ist. Je mehr Zwischenstufen vorhanden sind, desto größer ist die Komplexität des Verfahrens.

Im Prinzip wird hierbei aus zwei zeitlich aufeinander folgenden Eingangsbildern Eᵢ Eᵢ₊₁ nach einer Bewegungsschätzung zwischen diesen Eingangsbildern Eᵢ, Eᵢ₊₁ und einer Bewegungskompensation ein Zwischenbild Z1_{i+0,5} erzeugt. Die Bewegungsschätzung kann als Vorwärtsschätzung vom vorhergehenden Eingangsbild Eᵢ zum nachfolgenden Eingangsbild Eᵢ₊₁ und/oder durch Rückwärtsschätzung vom nachfolgenden Eingangsbild Eᵢ₊₁ zum vorhergehenden Eingangsbild Eᵢ erfolgen. Mit den so ermittelten Bewegungsvektoren werden diese Eingangsbilder Eᵢ, Eᵢ₊₁ dann in den Zeitrahmen des Zwischenbildes Z_{i+0,5} transformiert und dabei die bewegungskompensierten Bildinformationen aus den beiden Eingangsbildern Eᵢ, Eᵢ₊₁ miteinander gemischt. Auch hier kann das Mischen für die Luminanz- und Chrominanz-Informationen unterschiedlich oder bevorzugt gleichermaßen erfolgen. Hier bietet sich eine Mittelwertbildung der Bilddaten aus den durch Vorwärtsschätzung generierten Zwischenbildern und Rückwärtsschätzung generierten Zwischenbildern an. Durch einen Medianfilter zur Mischung des Medians dieses Mittelwertes mit den entsprechenden Bildinformationen aus der Vorwärtskompensation und Rückwärtskompensation können Artefakte weiter reduziert werden. Es kann aber auch einfach der Median der Bildpixel zur Bildung der Zwischenbilder genutzt werden.

Denkbar sind aber auch gewichtete Verknüpfungen der zugehörigen Bilddaten (Pixel) aus den bewegungskompensierten Eingangsbildern Eᵢ, Eᵢ₊₁, wobei die Wichtungsfaktoren im einfachsten Fall 1 betragen.

Die in der ersten Stufe so ermittelten Zwischenbilder Z1_{i+0,5} werden dann wiederum miteinander vermischt. Dabei werden zwei zeitlich aufeinander folgende Zwischenbilder Z_{i+0,5} und Z_{i+1,5} wiederum anhand der vorher bestimmten Bewegungsvektoren oder nach einer weiteren Bewegungsschätzung miteinander vermischt. Dies wird in mehreren Stufen wiederholt, um ein Ausgangsbild Aᵢ zu generieren.

Die Zwischenbilder Zᵢ₊ₖ mit k = 0,5, 1,5, ... können bereits als Ausgangsbilder zur Darstellung genutzt oder zur Generierung eines endgültigen Ausgangsbildes Aᵢ eingesetzt werden. Die Zwischenbilder stellen somit bereits Quasi-Ausgangsbilder dar.

Die Bewegungsschätzung kann wiederum mit Voll-Pixeln (Full-Pel) oder mit Teil-Pixeln durchgeführt werden.

Die Interpolation kann in einzelnen Stufen gleich erfolgen. Denkbar ist aber auch eine unterschiedliche Behandlung der geraden und ungeraden Stufen, wobei in den geraden Stufen einschließlich der ersten Stufe eine Vorwärts- und Rückwärts-Bewegungsschätzung und -kompensation und in den ungeraden Stufen eine Vorwärtskompensation vom zeitlich vorhergehenden zum aktuellen und eine Rückwärtskompensation vom zeitlich nachfolgenden in das aktuelle Bild erfolgt. Die Bewegungsschätzung wird dann zum zeitlich zwischenliegenden Bild in Bezug auf das aktuelle Bild im Teil-Pixel-Verfahren durchgeführt.

Die Bewegungsschätzung erfolgt für all die vorgenannten Verfahren vorzugsweise mit der Luminanz-Komponente von zwei zeitlich aufeinander folgenden Bildern (Bildrahmen) einer Bildsequenz (Videosequenz). Eines dieser Bilder ist dann das Referenzbild und das andere das Suchbild. Für den Bildschätz-Algorithmus ist es nicht wichtig, ob das Referenzbild das zeitlich vorhergehende und das Suchbild das zeitlich spätere Bild ist oder umgekehrt. Die Reihenfolge muss nur über die gesamte Bildsequenz beibehalten werden. Das Referenzbild wird für die Bewegungsschätzung in der Regel in rechteckige Blöcke von Pixeln aufgeteilt. Die Blockgröße ist ein wesentlicher Parameter des Bewegungsschätzungsverfahrens. Die Blockgröße kann bspw. als zu 16 x 16 Pixeln gewählt werden.

Mit der Bewegungsschätzung wird für jeden Pixelblock im Referenzbild ein Bewegungsvektor bestimmt. Dieser Bewegungsvektor zeigt auf eine Position in dem Suchbild, das mit dem Referenzblock am besten übereinstimmt und damit der Bewegungsrichtung folgt. Die Koordinaten der Bewegungsvektoren sind relativ zur Position des Referenzblockes.

Die Bewegungsvektoren werden in einer Suchstrategie aus einer Anzahl von Kandidatenvektoren ermittelt. Hierzu könnenfür die Kandidatenvektoren somit die absoluten Differenzen zwischen dem Referenzblock und dem Suchblock berechnet und gegebenenfalls noch ein kandidatenspezifischer Faktor zur Berechnung eines Kostenfaktors der Kandidaten addiert werden. Der Kandidatenvektor mit den geringsten Kosten (Abweichung) wird dann als der optimale Bewegungsvektor für den jeweiligen Block ausgewählt.

Um die Summe der absoluten Differenzen eines Blockes zu berechnen, wird ein Block aus dem Suchbild an der durch den angenommenen Kandidatenvektor bezeichneten Position ausgelesen. Hierbei kann unter Umständen auch eine bilineare Interpolation genutzt werden, um einen Suchblock aus dem Suchblockbild zu berechnen. Es wird dann die Summe der absoluten Differenzen zwischen den Pixeln des Referenzblockes und des Suchblockes berechnet.

Die Berechnung der Bewegungsvektoren kann durchgeführt werden, indem die Blöcke in einer mäanderförmigen Ordnung untersucht werden. Hierbei werden die Blöcke zunächst von links nach rechts in einer Bildmatrixzeile und dann die untereinanderliegenden Spalten der Bildmatrix untersucht.

Die Kandidatenvektoren können auf unterschiedliche Weise bestimmt werden. So können die Vektoren für bereits in der Nähe als geeignet erkannte Bewegungsvektoren ermittelte Vektoren genutzt werden. Es können auch die Bewegungsvektoren aus der Nachbarschaft des aktuellen Blockes als Kandidatenvektoren angenommen werden, die für den vorhergehenden Bildrahmen der Bildsequenz als optimaler Bewegungsvektor ermittelt wurden. Das im vorhergehenden Schritt ermittelte Bewegungsvektorfeld muss hierzu zwischengespeichert werden. Kandidatenvektoren können aber auch aus den für Nachbarblöcke ermittelten Bewegungsvektoren unter Addition eines pseudo-zufälligen Offsets ermittelt werden. Ein Kandidatenvektor kann auch ein Null-Vektor sein, bei dem keine Verschiebung des Bildblockes angenommen wird.

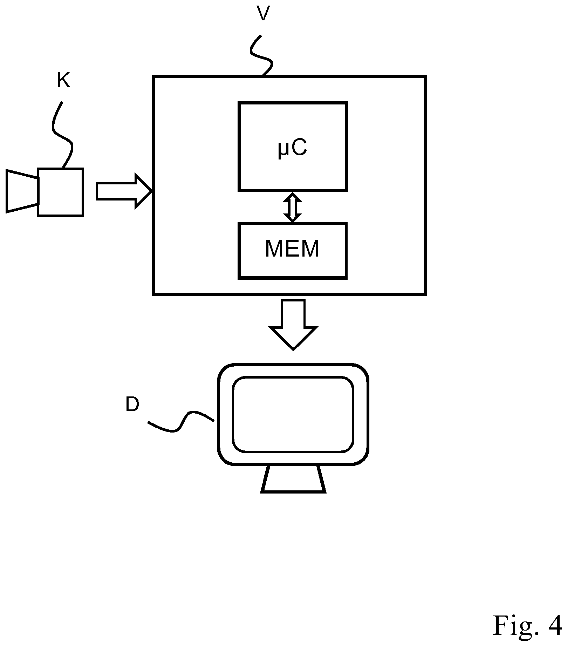

Figur 4 zeigt eine Skizze einer Bildverarbeitungseinheit V mit einer Datenverarbeitungseinheit µC und einem Datenspeicher MEM zum Abspeichern von Bilddaten. Die Datenverarbeitungseinheit ist bspw. ein geeignet programmierter Mikroprozessor, ein spezialisierter Bildverarbeitungsprozessor, ein FPGA (Field Programmable Gate Array), ein ASIC (anwenderspezifischer integrierter Schaltkreis) oder Ähnliches. Die Datenverarbeitungseinheit µC greift lesend und schreibend auf den Datenspeicher MEM zu. Dieser kann fragmentiert sein oder aus mehreren Speichereinheiten bestehen.

Eingangsbilddaten einer Bildsequenz werden von einer Kamera K aufgenommen, die direkt oder indirekt mit der Bildverarbeitungseinheit V verbunden ist. Die Eingangsbilddaten der Bildsequenz können dann im Datenspeicher MEM zwischengespeichert werden.

Nach der Verarbeitung dieser Eingangsdaten in der oben beschriebenen Weise durch die Datenverarbeitungseinheit µC werden die Ausgangsbilder dann an einen Bildschirm (Display D) zur Wiedergabe übertragen. Dieser Bildschirm D ist direkt oder indirekt mit der Bildverarbeitungseinheit V verbunden.

Denkbar ist aber auch, dass der Ausgangsbilddatenstrom auf einem geeigneten Datenträger abgespeichert oder über eine Datenfernverbindung weiter übertragen wird.

Die Bildverarbeitungseinheit V ist vorzugsweise in einem Kraftfahrzeug integriert. Die Kamera K und das Display D ersetzen dabei herkömmliche Rückspiegel oder ergänzen diese. Die Kamera K ist dabei auf das zu beobachtende Blickfeld ausgerichtet und das Display D im geeigneten Blickraum des Fahrers angeordnet.

## Patentansprüche

1. Verfahren zur Wiedergabe von Bildsequenzen mit flackernden Lichtinformationen (L) gepulster LED-Lichtquellen, die periodisch ihre Helligkeit verändern, das durch eine Bildverarbeitungseinheit (V) ausgeführt wird, die in ein Kraftfahrzeug integriert ist, mit den Schritten:
- Erzeugen einer Bildsequenz, die eine Folge von Bildern (Eᵢ) einer zeitlich hintereinander erfassten Bildszene mit Luminanz-Pixeln und Chrominanz-Pixeln umfasst, mittels einer in das Kraftfahrzeug integrierten Kamera (K), wobei die Kamera (K) Bestandteil der Bildverarbeitungseinheit (V) ist oder an die Bildverarbeitungseinheit (V) angeschlossen ist,
- Schätzen (ME) von Bewegungsvektoren für Bilddaten eines Bildes (Eᵢ) zur Beschreibung der räumlichen Verschiebung eines Bilddatums in einem ersten Bild (Eᵢ) zu demselben Bilddatum in einem zeitlich versetzten zweiten Bild (Eᵢ₊₁),
- Berechnen eines bewegungskompensierten Zwischenbildes (Bᵢ) mit den geschätzten Bewegungsvektoren,
- Generieren (MIX) eines zeitlich versetzten dritten Bildes (Aᵢ) durch Mischen der Bilddaten des ersten Bildes (Eᵢ), für die Bewegungsvektoren geschätzt wurden, mit einem durch jeweils einen Bewegungsvektor definierten räumlichen Versatz mit Bilddaten des zweiten Bildes (Eᵢ₊₁),
**dadurch gekennzeichnet, dass** das Mischen mit Wichtungsfaktoren gefiltert so erfolgt, dass ein Luminanz-Pixel des generierten dritten Bildes (Aᵢ) den Luminanzwert des entsprechenden Luminanz-Pixels des ersten Bildes (Eᵢ) erhält, ohne dass die entsprechende Luminanz-Information aus einem bewegungskompensierten Zwischenbild (Bᵢ) hinzugemischt wird, wenn das Luminanz-Pixel des ersten Bildes (Eᵢ) einen größeren Helligkeitswert als das entsprechende Luminanz-Pixel in dem bewegungskompensierten Zwischenbild (Bᵢ) hat, und andernfalls das Luminanz-Pixel des generierten dritten Bildes (Aᵢ) den mit einem ersten Wichtungsfaktor gewichteten Luminanzwert des entsprechenden Luminanz-Pixels des ersten Bildes (Eᵢ) addiert zu dem mit einem zweiten Wichtungsfaktor, der höher als der erste Wichtungsfaktor ist, gewichteten Luminanzwert des entsprechenden Luminanz-Pixels des bewegungskompensierten Zwischenbild (Bᵢ) erhält.

2. Verfahren nach Anspruch 1, **gekennzeichnet durch**
- Schätzen der Bewegungsvektoren für Bilddaten eines aus einem aufgenommenen Eingangsbild generierten ersten Ausgangsbildes in Bezug auf ein hierzu zeitlich versetztes Eingangsbild und
- Mischen dieses zeitlich versetzten Eingangsbildes mit den mittels der geschätzten Bewegungsvektoren bewegungskompensierten Bilddaten des ersten Ausgangsbildes zur Erzeugung eines zum ersten Ausgangsbild zeitlich versetzten zweiten Ausgangsbildes.

3. Verfahren nach Anspruch 2, **gekennzeichnet durch** Wiederholen der Schritte des Schätzens von Bewegungsvektoren und Mischens zur Generierung eines Ausgangsbildes mit dem im vorhergehenden Schritt generierten Ausgangsbild.

4. Verfahren nach Anspruch 1, **gekennzeichnet durch**
- Schätzen der Bewegungsvektoren für Bilddaten für ein aufgenommenes erstes Eingangsbild in Bezug auf diese Bilddaten in einem zeitlich vorhergehenden und/oder zeitlich nachfolgenden Eingangsbild und
- Mischen dieses ersten Eingangsbildes mit den mittels der geschätzten Bewegungsvektoren bewegungskompensierten Bilddaten des zeitlich vorhergehenden und/oder zeitlich nachfolgenden Eingangsbildes zur Erzeugung eines zum ersten Eingangsbild zeitlich passenden Ausgangsbildes.

5. Verfahren nach Anspruch 1, **gekennzeichnet durch**
- Schätzen der Bewegungsvektoren für Bilddaten für ein Paar zeitlich aufeinander folgender, aufgenommener Eingangsbilder zur Ermittlung der räumlichen Verschiebung der Bilddaten zwischen diesen Eingangsbildern und
- Generieren eines Ausgangsbildes durch Mischen von mittels der geschätzten Bewegungsvektoren bewegungskompensierten Bilddaten dieses Paares von Eingangsbildern.

6. Verfahren nach Anspruch 5, **gekennzeichnet durch** Generieren eines interpolierten Ausgangsbildes durch Mischen von einem Paar zeitlich aufeinander folgender, mittels der geschätzten Bewegungsvektoren bewegungskompensierter Ausgangsbilder.

7. Verfahren nach Anspruch 6, **gekennzeichnet durch** Wiederholen des Schrittes der Generierung von interpolierten Ausgangsbildern mit Paaren von im vorhergehenden Schritte generierten interpolierten Ausgangsbildern durch Mischen jeweils eines Paares zeitlich aufeinander folgender, mittels der geschätzten Bewegungsvektoren bewegungskompensierter interpolierter Ausgangsbilder.

8. Verfahren nach einem der vorhergehenden Ansprüche, **dadurch gekennzeichnet, dass** die Bilddaten, für die Bewegungsvektoren geschätzt werden, Bildblöcke in einem Bild sind.

9. Verfahren nach einem der vorhergehenden Ansprüche, **dadurch gekennzeichnet, dass** die flackernden Lichtinformationen durch von Leuchtdioden emittiertes Licht hervorgerufene flackernde Lichtinformationen sind.

10. Verfahren nach einem der vorhergehenden Ansprüche, **dadurch gekennzeichnet, dass** die in das Kraftfahrzeug integrierte Kamera eine Kamera ist, welche einem Fahrer des Kraftfahrzeugs zur Beobachtung des Fahrzeugumfelds dient.

11. Verfahren nach einem der vorhergehenden Ansprüche, **dadurch gekennzeichnet, dass** die in das Kraftfahrzeug integrierte Kamera eine Monokamera oder eine Stereokamera ist, welche als optischer Sensor zur Ermittlung von Sensordaten für ein oder mehrere Fahrerassistenzsysteme des Kraftfahrzeugs dient.

12. Bildverarbeitungseinheit (V) mit Datenspeicher zum Abspeichern von Bilddaten und mit einer Datenverarbeitungseinheit, wobei die Bildverarbeitungseinheit (V) und eine Kamera (K), die Bestandteil der Bildverarbeitungseinheit (V) ist oder an die Bildverarbeitungseinheit (V) angeschlossen ist, in einem Kraftfahrzeug integriert sind und die Datenverarbeitungseinheit zur Durchführung des Verfahrens nach einem der vorhergehenden Ansprüche durch Zugriff auf in dem Datenspeicher abgespeicherte Bilddaten eingerichtet ist.

13. Bildverarbeitungseinheit nach Anspruch 12, **dadurch gekennzeichnet, dass** die in das Kraftfahrzeug integrierte Kamera eine Kamera ist, welche einem Fahrer des Kraftfahrzeugs zur Beobachtung des Fahrzeugumfelds dient.

14. Bildverarbeitungseinheit nach Anspruch 12 oder 13, **dadurch gekennzeichnet, dass** die in das Kraftfahrzeug integrierte Kamera eine Monokamera oder eine Stereokamera ist, welche als optischer Sensor zur Ermittlung von Sensordaten für ein oder mehrere Fahrerassistenzsysteme des Kraftfahrzeugs dient.

15. Computerprogramm mit Programmcodemitteln, die zur Durchführung des Verfahrens nach einem der Ansprüche 1 bis 11 eingerichtet sind, wenn das Computerprogramm mit einer Datenverarbeitungseinheit ausgeführt wird.

## Claims

1. Method for reproducing image sequences with flickering light information (L) of pulsed LED light sources which periodically change their brightness, which is carried out by an image processing unit (V) which is integrated in a motor vehicle, having the steps:
- Generating an image sequence comprising a sequence of images (Eᵢ) of a temporally successively acquired image scene with luminance pixels and chrominance pixels by means of a camera (K) integrated in the motor vehicle, the camera (K) being part of the image processing unit (V) or being connected to the image processing unit (V),
- estimating (ME) motion vectors for image data of an image (Eᵢ) for describing the spatial displacement of an image datum in a first image (Eᵢ) relative to the same image datum in a temporally displaced second image (Eᵢ₊₁),
- calculating a motion compensated intermediate image (Bᵢ) with the estimated motion vectors,
- generating (MIX) a temporally offset third image (Aᵢ) by mixing the image data of the first image (Eᵢ) for which motion vectors have been estimated with a spatial offset defined by a respective motion vector with image data of the second image (Eᵢ₊₁),
**characterised in that** the mixing is filtered with weighting factors such that a luminance pixel of the generated third image (Aᵢ) receives the luminance value of the corresponding luminance pixel of the first image (Eᵢ) without mixing in the corresponding luminance information from a motion compensated intermediate image (Bᵢ) if the luminance pixel of the first image (Eᵢ) has a luminance value greater than the corresponding luminance pixel in the motion compensated intermediate image (Bᵢ), and otherwise the luminance pixel of the generated third image (Aᵢ) receives the luminance value of the corresponding luminance pixel of the first image (Eᵢ) weighted by a first weighting factor added to the luminance value of the corresponding luminance pixel of the motion compensated intermediate image (Bᵢ) weighted by a second weighting factor higher than the first weighting factor.

2. A method according to claim 1, **characterized by**
- estimating the motion vectors for image data of a first output image generated from a captured input image with respect to a temporally offset input image; and
- mixing this temporally offset input image with the image data of the first output image compensated for motion by means of the estimated motion vectors in order to generate a second output image temporally offset from the first output image.

3. A method according to claim 2, **characterised by** repeating the steps of estimating motion vectors and merging to generate an output image with the output image generated in the previous step.

4. A method according to claim 1, **characterized by**
- estimating motion vectors for image data for a captured first input image with respect to said image data in a temporally preceding and/or temporally succeeding input image, and
- mixing said first input image with the image data of the temporally preceding and/or temporally succeeding input image compensated for motion by means of the estimated motion vectors to produce an output image temporally matching the first input image.

5. A method according to claim 1, **characterized by**
- estimating the motion vectors for image data for a pair of temporally successive input images taken to determine the spatial displacement of the image data between those input images; and
- generating an output image by mixing image data of said pair of input images motion compensated by said estimated motion vectors.

6. A method according to claim 5, **characterised by** generating an interpolated output image by mixing a pair of temporally successive motion compensated output images by means of the estimated motion vectors.

7. A method according to claim 6, **characterized by** repeating the step of generating interpolated output images with pairs of interpolated output images generated in the previous step by mixing one pair each of temporally successive motion-compensated interpolated output images by means of the estimated motion vectors.

8. A method according to any one of the preceding claims, **characterized in that** the image data for which motion vectors are estimated are image blocks in an image.

9. A method according to any one of the preceding claims, **characterised in that** the flickering light information is flickering light information caused by light emitted from light emitting diodes.

10. Method according to one of the preceding claims, **characterized in that** the camera integrated in the motor vehicle is a camera which is used by a driver of the motor vehicle for observing the vehicle environment.

11. Method according to one of the preceding claims, **characterized in that** the camera integrated in the motor vehicle is a monocamera or a stereo camera which serves as an optical sensor for determining sensor data for one or more driver assistance systems of the motor vehicle.

12. Image processing unit (V) having a data memory for storing image data and having a data processing unit, the image processing unit (V) and a camera (K) which is a component of the image processing unit (V) or is connected to the image processing unit (V) being integrated in a motor vehicle, and the data processing unit being set up to carry out the method according to one of the preceding claims by accessing image data stored in the data memory.

13. Image processing unit according to claim 12, **characterized in that** the camera integrated in the motor vehicle is a camera which is used by a driver of the motor vehicle for observing the vehicle environment.

14. Image processing unit according to claim 12 or 13, **characterised in that** the camera integrated in the motor vehicle is a monocamera or a stereo camera which serves as an optical sensor for determining sensor data for one or more driver assistance systems of the motor vehicle.

15. Computer program with program code means which are set up for carrying out the method according to any one of claims 1 to 11 when the computer program is executed with a data processing unit.

## Revendications

1. Procédé de reproduction de séquences d'images contenant des informations lumineuses vacillantes (L) de sources lumineuses à DEL pulsées qui changent périodiquement de luminosité, qui est mis en oeuvre par une unité de traitement d'images (V) intégrée dans un véhicule automobile, comportant les étapes consistant à :
- générer une séquence d'images qui comprend une succession d'images (Eᵢ) d'une scène d'image saisie successivement dans le temps avec des pixels de luminance et des pixels de chrominance, au moyen d'une caméra (K) intégrée dans le véhicule automobile, la caméra (K) faisant partie de l'unité de traitement d'images (V) ou étant raccordée à l'unité de traitement d'images (V),
- estimer (ME) des vecteurs de mouvement pour des données d'image d'une image (Eᵢ) pour décrire le décalage spatial d'une donnée d'image dans une première image (Eᵢ) par rapport à la même donnée d'image dans une deuxième image (Eᵢ₊₁) décalée dans le temps,
- calculer une image intermédiaire compensée en mouvement (Bᵢ) avec les vecteurs de mouvement estimés,
- générer (MIX) une troisième image (Aᵢ), décalée dans le temps, en mélangeant les données d'image de la première image (Eᵢ), pour lesquelles des vecteurs de mouvement ont été estimés et qui présentent un décalage spatial défini par un vecteur de mouvement respectif, avec des données d'image de la deuxième image (Eᵢ₊₁),
**caractérisé en ce que** le mélange s'effectue en étant filtré avec des facteurs de pondération de telle sorte qu'un pixel de luminance de la troisième image générée (Aᵢ) obtient la valeur de luminance du pixel de luminance correspondant de la première image (Eᵢ) sans que l'information de luminance correspondante provenant d'une image intermédiaire compensée en mouvement (Bᵢ) soit ajoutée si le pixel de luminance de la première image (Eᵢ) a une valeur de luminosité supérieure à celle du pixel de luminance correspondant dans l'image intermédiaire compensée en mouvement (Bᵢ), et sinon, le pixel de luminance de la troisième image générée (Aᵢ) obtient la valeur de luminance du pixel de luminance correspondant de la première image (Eᵢ), valeur qui est pondérée par un premier facteur de pondération et additionnée à la valeur de luminance du pixel de luminance correspondant de l'image intermédiaire compensée en mouvement (Bᵢ), valeur qui est pondérée par un deuxième facteur de pondération supérieur au premier facteur de pondération.

2. Procédé selon la revendication 1, **caractérisé par** les étapes consistant à :
- estimer les vecteurs de mouvement pour des données d'image d'une première image de sortie générée à partir d'une image d'entrée enregistrée en relation avec une image d'entrée décalée dans le temps par rapport à celle-ci, et
- mélanger cette image d'entrée décalée dans le temps avec les données d'image de la première image de sortie, compensées en mouvement au moyen des vecteurs de mouvement estimés, afin de générer une deuxième image de sortie décalée dans le temps par rapport à la première image de sortie.

3. Procédé selon la revendication 2, **caractérisé par** la répétition des étapes d'estimation des vecteurs de mouvement et de mélange avec l'image de sortie générée à l'étape précédente afin de générer une image de sortie.

4. Procédé selon la revendication 1, **caractérisé par** les étapes consistant à :
- estimer les vecteurs de mouvement pour des données d'image pour une première image d'entrée enregistrée en relation avec ces données d'image dans une image d'entrée précédente et/ou suivante dans le temps, et
- mélanger cette première image d'entrée avec les données d'image de l'image d'entrée précédente et/ou suivante dans le temps, compensées en mouvement au moyen des vecteurs de mouvement estimés, afin de générer une image de sortie adaptée dans le temps à la première image d'entrée.

5. Procédé selon la revendication 1, **caractérisé par** les étapes consistant à :
- estimer les vecteurs de mouvement pour des données d'image pour une paire d'images d'entrée enregistrées successives dans le temps afin de déterminer le décalage spatial des données d'image entre ces images d'entrée, et
- générer une image de sortie en mélangeant les données d'image de cette paire d'images d'entrée, compensées en mouvement au moyen des vecteurs de mouvement estimés.

6. Procédé selon la revendication 5, **caractérisé par** la génération d'une image de sortie interpolée en mélangeant une paire d'images de sortie successives dans le temps, compensées en mouvement au moyen des vecteurs de mouvement estimés.

7. Procédé selon la revendication 6, **caractérisé par** la répétition de l'étape de génération d'images de sortie interpolées avec des paires d'images de sortie interpolées générées à l'étape précédente en mélangeant une paire respective d'images de sortie interpolées successives dans le temps, compensées en mouvement au moyen des vecteurs de mouvement estimés.

8. Procédé selon l'une des revendications précédentes, **caractérisé en ce que** les données d'image pour lesquelles des vecteurs de mouvement sont estimés sont des blocs d'image dans une image.

9. Procédé selon l'une des revendications précédentes, **caractérisé en ce que** les informations lumineuses vacillantes sont des informations lumineuses vacillantes provoquées par la lumière émise par des diodes électrolum inescentes.

10. Procédé selon l'une des revendications précédentes, **caractérisé en ce que** la caméra intégrée dans le véhicule automobile est une caméra qui sert à un conducteur du véhicule automobile pour observer l'environnement du véhicule.

11. Procédé selon l'une des revendications précédentes, **caractérisé en ce que** la caméra intégrée dans le véhicule automobile est une caméra mono ou une caméra stéréo qui sert de capteur optique pour déterminer des données de capteur pour un ou plusieurs systèmes d'assistance à la conduite du véhicule automobile.

12. Unité de traitement d'images (V) comportant une mémoire de données pour stocker des données d'images et une unité de traitement de données,
dans laquelle l'unité de traitement d'images (V) et une caméra (K) qui fait partie de l'unité de traitement d'images (V) ou qui est raccordée à l'unité de traitement d'images (V) sont intégrées dans un véhicule automobile, et
l'unité de traitement de données est conçue pour mettre en oeuvre le procédé selon l'une des revendications précédentes par accès à des données d'images stockées dans la mémoire de données.

13. Unité de traitement d'images selon la revendication 12, **caractérisée en ce que** la caméra intégrée dans le véhicule automobile est une caméra qui sert à un conducteur du véhicule automobile pour observer l'environnement du véhicule.

14. Unité de traitement d'images selon la revendication 12 ou 13, **caractérisée en ce que** la caméra intégrée dans le véhicule automobile est une caméra mono ou une caméra stéréo qui sert de capteur optique pour déterminer des données de capteur pour un ou plusieurs systèmes d'assistance à la conduite du véhicule automobile.

15. Programme informatique comprenant des moyens de code de programme conçus pour mettre en oeuvre le procédé selon l'une des revendications 1 à 11, lorsque le programme informatique est exécuté avec une unité de traitement de données.
